# EUROPÄISCHE PATENTSCHRIFT

(11) **EP 0 545 013 B1**
(45) Veröffentlichungstag und Bekanntmachung des Hinweises auf die Patenterteilung: **28.06.1995**
(21) Anmeldenummer: 92116296.2
(22) Anmeldetag: 23.09.1992
(51) Int. Cl.: B65H 18/06, B65H 18/10

(54) **Vorrichtung zum Kuppeln eines Wickelwellenzapfens mit einem Antriebswellenzapfen**
Device for coupling a winding shaft tenon to a driving shaft tenon
Dispositif pour accoupler un tenon d'arbre d'enroulement avec un tenon d'arbre moteur

(30) Priorität: 18.11.1991 DE 4137921
(43) Veröffentlichungstag der Anmeldung: 09.06.1993
(73) Patentinhaber: Windmöller & Hölscher, D-49525 Lengerich (DE)
(72) Erfinder: Pyka, Udo, W-4540 Lengerich (DE); Teepe, Horst, W-4540 Lengerich (DE)
(74) Vertreter: Gossel, Hans K., Dipl.-Ing.

(56) Entgegenhaltungen:
- DE-B- 1 774 566
- DE-C- 2 932 895
- US-A- 2 823 961

## Beschreibung

Die Erfindung betrifft eine Vorrichtung zum Kuppeln eines Wickelwellenzapfens mit einem Antriebswellenzapfen nach dem Oberbegriff des Anspruchs 1.

Bei einer aus der DE-C-29 32 895 bekannten Kupplungsvorrichtung ist der Wickelwellenzapfen mit zueinander parallelen seitlichen Abflachungen oder einem im Querschnitt dreieckigen oder quadratischen Endstück versehen, die in der Ausnehmung gehaltert sind, wobei die Ausnehmung nach Schließen der Verriegelungseinrichtung eine zu dem mit Abflachungen versehenen Ende des Wickelwellenzapfens oder dem Enstück komplementäre Kontur annimmt. Aufgrund von Durchbiegungen der Wickelwelle und anderer unvermeidbarer Relativbewegungen des mit Abflachungen versehenenen Endteils des Wickelwellenzapfens oder des Endstücks tritt ein Verschleiß in der eine Kupplungshälfte bildenden Ausnehmung des Antriebswellenzapfens auf, der einen Austausch von Kupplungsteilen erforderlich macht. Zur Erhöhung der Lebensdauer ist daher bei der bekannten Vorrichtung vorgesehen, daß die kuppelnden Teile des Antriebswellenzapfens mit einem die Ausnehmung auskleidenden Futter versehen sind, das sich nach einem Verschleiß austauschen läßt, ohne den ganzen mit dem Kupplungsteil versehenen Antriebswellenzapfen austauschen zu müssen. Aufgrund des unvermeidbaren Verschleisses tritt jedoch bei der bekannten Kupplungsvorrichtung zwischen dem mit Abflachungen versehenen Endteil des Wickelwellenzapfens oder dem Endstück und dem Haltefutter des Antriebswellenzapfens ein gewisses Spiel auf, das eine zentrische Lagerung und damit einen genauen Rundlauf der Wickelwelle beeinträchtigt. Der genaue Rundlauf der Wickelwelle ist aber für eine gute Wicklung und zur Einhaltung einer genau definierten Bahnspannung während des Wickelvorganges unbedingt notwendig.

Bei einer aus DE-B-17 74 566 bekannten Vorrichtung nach dem Oberbegriff des Patentanspruchs 1 ist in der radialen Ausnehmung des Antriebswellenzapfens eine Stufe vorgesehen, auf die sich der Wickelwellenzapfen mit einer entsprechenden Gegenstufe abstützt, wobei der Wickelwellenzapfen in der radialen Ausnehmung durch einen axial verschieblichen Ring mit einem die Ausnehmung schließenden, sektorförmigen Futterstück gehalten ist. Auch bei dieser Kupplungsvorrichtung kann zwischen den durch die Stufen gebildeten Abflachungen ein Spiel auftreten, das eine zentrische Lagerung und damit den erforderlichen genauen Rundlauf der Wickelwelle beeinträchtigt.

Aufgabe der Erfindung ist es daher, die bekannte Kupplungsvorrichtung derart zu verbessern, daß auch nach längerem Gebrauch eine zentrische Lagerung des Wickelwellenzapfens gewährleistet ist.

Erfindungsgemäß wird diese Aufgabe bei einer Kupplungsvorrichtung der gattungsgemäßen Art dadurch gelöst, daß auf den Wickelwellenzapfen ein Schwenklager aufgesetzt ist, dessen Außenring, der zu dessen Innenring um eine Querachse schwenkbar ist, in der radialen Ausnehmung gehaltert und verriegelbar ist.

Bei der erfindungsgemäßen Kupplungsvorrichtung sind die Funktionen der Lagerung und der Übertragung des Drehmoments zwischen den miteinander gekuppelten Wellenzapfen voneinander getrennt, so daß einerseits eine gute zentrische Lagerung und eine Drehmomentübertragung gewährleistet sind, ohne daß die beiden Funktionen einander beeinträchtigen können. Da der Wickelwellenzapfen in dem Antriebswellenzapfen durch ein Schwenklager gelagert ist, ist eine verschleißarme Lagerung über eine lange Zeit auch dann gewährleistet, wenn beträchtliche Durchbiegungen der Wickelwelle auftreten sollten. Da das Schwenklager nur der zentrischen Lagerung des Wickelwellenzapfens und nicht auch der Drehmomentübertragung dient, ist die Lagerung nicht dem sonst unvermeidbaren erheblichen Verschleiß durch die Drehmomentübertragung ausgesetzt. Bei der erfindungsgemäßen Kupplungsvorrichtung erfolgt die Übertragung des Drehmoments durch die stirnseitige Verbindung des Wickelwellenzapfens mit dem Antriebswellenzapfen, so daß diese das Drehmoment übertragende Kupplung selbst nach Auftreten eines Verschleisses zwischen den die Drehmomentkupplung bewirkenden Teilen einen guten Rundlauf der Wickelwelle nicht beeinträchtigen kann.

Nach einer vorteilhaften Ausgestaltung ist vorgesehen, daß das Schwenklager aus einem Innenring mit kugeliger Außenseite und einem auf diesen gehalterten Außenring mit entsprechend komplementärer innerer Schale besteht. Das Schwenklager vermag Durchbiegungen der Wickelwelle auszugleichen, ohne daß diese zu einem Verschleiß verursachenden Beanspruchungen führen.

Zweckmäßigerweise ist die Stirnseite des Wickelwellenzapfens mit einem Kupplungsstück verschraubt, das formschlüssig in der radialen Ausnehmung des Antriebswellenzapfens gehalten ist. Durch diese formschlüssige Drehverbindung der Zapfen ist ein günstige Drehmomentübertragung gewährleistet.

Das Kupplungsstück kann aus einer dreieckigen Scheibe bestehen, die mit zwei Seiten an den Flanken eines Haltebackens gehalten ist. Die Haltebacken bestehen zweckmäßigerweise aus Segmenten, die mit den Wandungen einer halbzylindrischen Schale der radialen Ausnehmung durch Schraubbolzen o.dgl. verbunden sind, so daß diese nach einem Verschleiß ausgetauscht werden können. Zweckmäßigerweise ist das Kupplungsstück über eine Scheibe mit dem stirnseitigen Ende des Wickelwellenzapfens verschraubt, die sich spannend auf den Innenring des Schwenklagers abstützt. Dabei kann der Innenring gegen einen ringförmigen Absatz des Wellenzapfens gespannt werden, so daS zusätzlich auch eine kraftschlüssige Drehmomentübertragung erfolgt.

In weiterer Ausgestaltung der Erfindung ist vorgesehen, daß das Schwenklager durch einen axial verschieblichen Haltering in der Ausnehmung gehalten ist, der zwischen seiner Verriegelungsstellung und seiner Freigabestellung beweglich ist. Dieser Haltering verriegelt das Schwenklager in der halbzylindrischen Schale, die den Grund der radialen Ausnehmung des Antriebswellenzapfens bildet.

Zweckmäßigerweise ist der Haltering mit einem in die Ausnehmung greifenden Segment versehen, das mit einer inneren zylinderschalenförmigen Wandung versehen ist, die den halbzylinderschalenförmigen Grund der Ausnehmung zu einem geschlossenen zylindrischen Abschnitt ergänzt, in dem das Schwenklager gehalten ist. Dabei fluchtet selbstverständlich die Achse dieses geschlossenen zylindrischen Abschnitts mit der Achse der Wickelwelle.

Zweckmäßigerweise ist der Haltering über einen Bolzen in einem axialen Langloch des Antriebswellenzapfens zwischen seiner Verriegelungsstellung und seiner Freigabestellung verschieblich. Auf diese Weise sind die Endlagen des Halterings genau definiert und gesichert.

Um eine unbeabsichtigte Bewegung des Halterings in seine Freigabestellung zu verhindern, ist nach einer weiteren Ausgestaltung vorgesehen, daß der Haltering in seiner Verriegelungsstellung durch eine federbelastete Klinke gesichert ist.

Ein Ausführungsbeispiel der Erfindung wird nachstehend anhand der Zeichnung näher erläutert.

In dieser zeigt
- Fig. 1: einen Längsschnitt durch die miteinander gekuppelten Wickelwellen- und Antriebswellenzapfen und
- Fig. 2: einen Schnitt durch die Kupplungsvorrichtung längs der Linie II-II in Fig. 1.

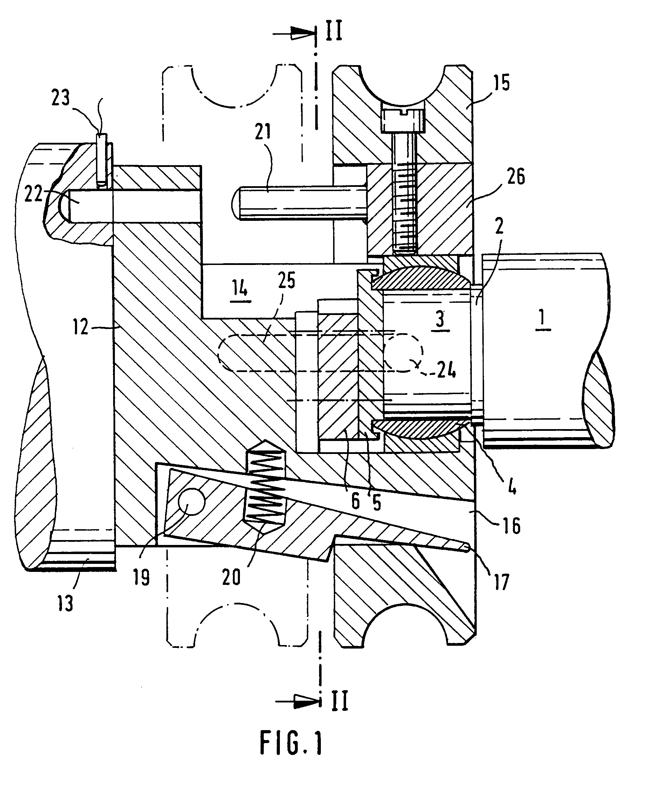

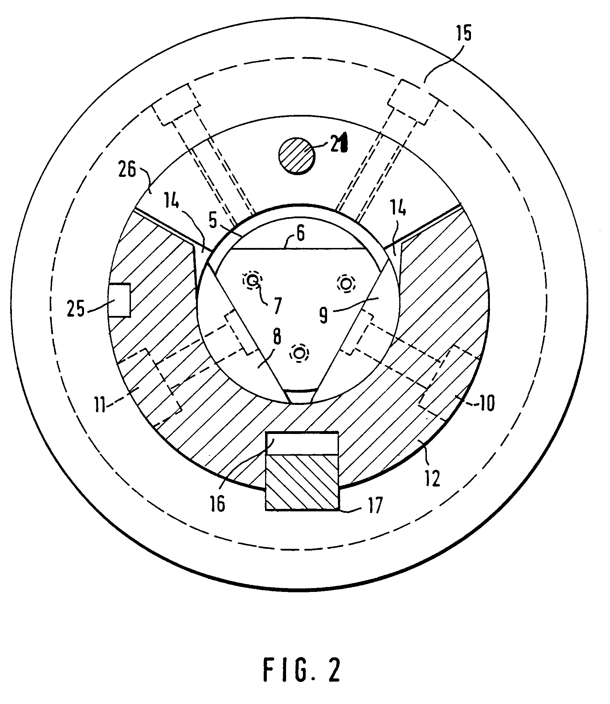

Das linke Ende der Wickelwelle 1 ist mit einem in seinem Durchmesser verringernden Ansatz 2 und einem diesem gegenüber abgesetzten Wellenzapfen 3 versehen. Auf den Wellenzapfen 3 ist ein Gelenklager 4 aufgesetzt, das sich einendig am Ansatz 2 abstützt. Das andere Ende des Gelenklagers 4 wird durch eine Mitnehmerscheibe 5 gesichert, an der dem Wellenzapfen 3 abgewandten Seite ein Kupplungsstück 6 anliegt. Letzteres, nämlich das Kupplungsstück 6 und die Mitnehmerscheibe 5 sind über Schrauben 7 mit dem Wellenzapfen 3 fest verschraubt. Wie dabei die Figur 2 erkennen läßt, weist das Kupplungsstück 6 eine im Querschnitt etwa dreieckige Form auf. Mit zwei Seiten liegt dabei das Kupplungsstück 6 an Segmenten 8 und 9 an, welche über Schrauben 10 und 11 mit dem Antriebszapfen 12 einer Antriebswelle 13 verbunden sind. Der Antriebszapfen 12 ist, bezogen auf Figur 1, im oberen Bereich teilweise ausgefräst, so daß die Wickelwelle 1 von oben in die Ausfräsung hineingelegt werden kann, wobei zum einen wie bereits erwähnt, das Kupplungsstück 6 auf den Segmenten 8 und 9 aufliegt und zum anderen der Außenring des Gelenklagers 4 ebenfalls eine Auflage im Antriebszapfen 12 findet. Um nun aber überhaupt die Wickelwelle in die Ausnehmung 14 des Antriebszapfens 12 einlegen zu können, ist es erforderlich, die Ringscheibe 15 aus der in Figur 1 mit vollen Linien dargestellte Lage in die mit strichpunktierten Linien dargestellte Lage zu verschieben. Zu diesem Zweck ist in den Antriebszapfen 12 eine in Achsrichtung verlaufende Nut 16 eingebracht, in der eine Klinke 17 um die Drehachse 19 schwenkbar gelagert ist. Diese Klinke 17 wird über eine Feder 20 in der in Figur 1 dargestellten Sperrlage gehalten. Durch Niederdrücken dieser Klinke 17 wird die Ringscheibe 15 freigegeben, so daß sie nunmehr nach links in ihre mit strichpunktierten Linien dargestellten Lage verschoben werden kann. In dieser Lage greift der mit der Ringscheibe 15 fest verbundene Sicherungsstift 21 in eine Sacklochbohrung 22 ein, so daß über einen Initiator 23 festgestellt werden kann, ob sich die Ringscheibe 15 tatsächlich in ihrer linken Endlage befindet. Über den Initiator 23 wird dann verhindert, daß der Motor unbeabsichtigerweise eingeschaltet werden kann und sich die Antriebswelle 13 dreht.

Die beiden Endlagen der Ringscheibe 15 sind durch einen mit ihr verbundenen Bolzen 24 definiert und gesichert, der in eine Längsnut 25 hineinragt, die in dem Antriebszapfen 12 vorgesehen ist. Nach dem Einlegen einer neuen Wickelwelle wird dann die Ringscheibe 15 wieder in die in Figur 1 mit vollen Linien dargestellte Lage verschoben und in dieser Lage über die Klinke 17 gehalten. Ein mit der Ringscheibe 15 verschraubtes Segment 26 schiebt sich dabei auf die äußere Lagerschale des Gelenklagers 4, so daß dieses umfangseitig einmal von dem Antriebszapfen 12 und zum anderen vom Segment 26 gehalten ist.

Die Antriebskraft zur Wickelwelle verläuft von der Antriebswelle 13 über den Antriebszapfen 12 auf die Segmente 8 und 9 und über diese auf das Kupplungsstück 6. Von dort aus über die Mitnehmerscheibe 5 bzw. die Schrauben 7 auf den Wellenzapfen 3 der Wickelwelle 1. Im Bereich der Lagerung der Wickelwelle 1 durch das Gelenklager 4 treten somit keinerlei Antriebskräfte auf, die in diesem Bereich irgendwelchen Verschleiß erzeugen könnten. Die nicht vermeidbare geringfügige Durchbiegung der Wickelwelle während des Wickelvorganges wird vom Gelenklager 4 aufgefangen. Selbst wenn nun nach längerer Einsatzdauer Verschleiß im Bereich des Kupplungsstückes 6 und im Bereich der Segmente 8 und 9 auftreten sollte, so wäre dies völlig unabhängig von der eigentlichen Lagerung der Wickelwelle 1.

## Patentansprüche

1. Vorrichtung zum Kuppeln eines Wickelwellenzapfens (3) mit einem Antriebswellenzapfen (12), der mit einer radialen Ausnehmung (14) versehen ist, in der der Wickelwellenzapfen (3) durch eine Verriegelungseinrichtung (15-17, 19, 20) undrehbar gehalten ist, wobei der Wickelwellenzapfen (3) stirnseitig zur Übertragung des Drehmoments mit dem Antriebswellenzapfen (12) verbunden ist,
**dadurch gekennzeichnet,**
daß auf den Wickelwellenzapfen (3) ein Schwenklager (4) aufgesetzt ist, dessen Außenring, der zu dessen Innenring um eine Querachse schwenkbar ist, in der radialen Ausnehmung (14) gehaltert und verriegelbar ist.

2. Vorrichtung nach Anspruch 1, dadurch gekennzeichnet, daß das Schwenklager (4) aus einem Innenring mit kugeliger Außenseite und einem auf diesen gehalterten Außenring mit entsprechend komplementärer innerer Schale besteht.

3. Vorrichtung nach Anspruch 1 oder 2, dadurch gekennzeichnet, daß die Stirnseite des Wickelwellenzapfens (3) mit einem Kupplungsstück (6) verschraubt ist, das formschlüssig in der radialen Ausnehmung des Antriebswellenzapfens (12) gehaltert ist.

4. Vorrichtung nach einem der Ansprüche 1 bis 3, dadurch gekennzeichnet, daß das Kupplungsstück aus einer dreieckigen Scheibe (6) besteht, die mit zwei Seiten an den Flanken von Haltebacken (8,9) gehalten ist.

5. Vorrichtung nach Anspruch 4, dadurch gekennzeichnet, daß die Haltebacken aus Segmenten (8,9) bestehen, die mit den Wandungen einer halbzylindrischen Schale der radialen Ausnehmung (14) durch Schraubbolzen (10,11) o.dgl. verbunden sind.

6. Vorrichtung nach einem der vorhergehenden Ansprüche, dadurch gekennzeichnet, daß das Kupplungsstück (6) über eine Scheibe (5) mit dem stirnseitigen Ende des Wickelwellenzapfens (3) verschraubt ist, die sich spannend auf den Innenring des Schwenklagers (4) abstützt.

7. Vorrichtung nach einem der Ansprüche 1 bis 6, dadurch gekennzeichnet, daß das Schwenklager (4) durch einen axial verschieblichen Haltering (15) in der Ausnehmung (14) gehalten ist, der zwischen seiner Verriegelungsstellung und seiner Freigabestellung beweglich ist.

8. Vorrichtung nach Anspruch 7, dadurch gekennzeichnet, daß der Haltering (15) mit einem in die Ausnehmung greifenden Segment (26) versehen ist, das mit einer inneren zylinderschalenförmigen Wandung versehen ist, die den halbzylinderschalenförmigen Grund der Ausnehmung (14) zu einem geschlossenen zylindrischen Abschnitt ergänzt, in dem das Schwenklager gehalten ist.

9. Vorrichtung nach Anspruch 7 oder 8, dadurch gekennzeichnet, daß der Haltering (15) über einen Bolzen (24) in einem axialen Langloch (25) des Antriebswellenzapfens (12) zwischen seiner Verriegelungsstellung und seiner Freigabestellung verschieblich ist.

10. Vorrichtung nach einem der Ansprüche 7 bis 9, dadurch gekennzeichnet, daß der Haltering (15) in seiner Verriegelungsstellung durch eine federbelastete Klinke (17) gesichert ist.

## Claims

1. A device for coupling a winding shaft stub (3) to a driving shaft stub (12) which is provided with a radial recess (14) wherein the winding shaft stub (3) is held secured against rotation by a bolting device (15-17, 19, 20), in which arrangement the winding shaft stub (3) is connected at its end face to the driving shaft stub (12) for transmitting the torque,
**characterized in that**
on the winding shaft stub (3), there is fitted a swivel bearing (4) whose outer ring, which is pivotable relative to its inner ring round a transverse axis, is mounted and lockable in the radial recess (14).

2. A device according to claim 1, characterized in that the swivel bearing (4) consists of an inner ring with a spherical outer side and of an outer ring mounted thereon with a corresponding complementary inner shell.

3. A device according to claim 1 or 2, characterized in that the end face of the winding shaft stub (3) is screwed together with a coupling element (6) which is held in the radial recess of the driving shaft stub (12) with a form fit.

4. A device according to one of claims 1 to 3, characterized in that the coupling element consists of a triangular plate (6) which is held with two sides on the sides of holding jaws (8, 9).

5. A device according to claim 4, characterized in that the holding jaws consist of segments (8, 9) which are connected to the walls of a half-cylindrical shell of the radial recess (14) by screw-bolts (10, 11) or the like.

6. A device according to one of the preceding claims, characterized in that the coupling element (6) is screwed together with the end face end of the winding shaft stub (3), via a disk (5) which bears under tension on the inner ring of the swivel bearing (4).

7. A device according to one of claims 1 to 6, characterized in that the swivel bearing (4) is held by an axially displaceable holding ring (15) in the recess (14), which ring is displaceable between its bolting position and its releasing position.

8. A device according to claim 7, characterized in that the holding ring (15) is provided with a segment (26) reaching into the recess, which segment is provided with an inner cylindrical shell-shaped wall which completes the half-cylindrical shell-shaped bottom of the recess (14) into a closed cylindrical section wherein the swivel bearing is held.

9. A device according to claim 7 or 8, characterized in that the holding ring (15) is displaceable by means of a bolt (24) in an axial slot (25) of the driving shaft stub (12) between its bolting position and its releasing position.

10. A device according to one of claims 7 to 9, characterized in that the holding ring (15) is secured in its bolted position by a spring-loaded latch (17).

## Revendications

1. Dispositif pour accoupler un tenon d' arbre d'enroulement (3) avec un tenon d'arbre moteur (12) qui est pourvu d'un évidement radial (14) dans lequel est logé, de façon non rotative, le tenon d'arbre d'enroulement (3) par un dispositif de verrouillage (15-17, 19, 20), le tenon d'arbre d'enroulement (3) étant relié à la face frontale pour la transmission du couple de rotation au tenon d'arbre moteur (12), caractérisé en ce qu'il est disposé sur le tenon d'arbre d'enroulement (3) un palier pivotent (4) dont l'anneau extérieur pouvant pivoter relativement à l'anneau intérieur de celui-ci, autour d'un axe transversal, est retenu dans l'évidement radial (14) et peut être verrouillé dans celui-ci.

2. Dispositif selon la revendication 1, caractérisé an ce que le palier pivotant (4) est constitué d'un anneau intérieur ayant une face extérieure sphérique et d'un anneau extérieur retenu sur celui-ci ayant une coque intérieure complémentaire correspondante.

3. Dispositif selon la revendication 1 ou 2, caractérisé en ce que la face frontale du tenon d'arbre d'enroulement (3) est assemblée par vissage avec une pièce d'accouplement (6) qui est retenue par concordance des formes dans l'évidement radial du tenon d'arbre moteur (12).

4. Dispositif selon l'une des revendications 1 à 3, caractérisé en ce que la pièce d'accouplement est constituée d'un disque triangulaire (6) qui est retenu par deux côtés aux flancs de mâchoires de retenue (8, 9).

5. Dispositif selon la revendication 4, caractérisé en ce que les mâchoires de retenue sont constituées de segments (8, 9) qui sont reliés aux parois d'une coque demicylindrique de l'évidement radial (14) par des boulons de vissage (10, 11) ou analogues.

6. Dispositif selon l'une des revendications précédentes, caractérisé an ce que la pièce d'accouplement (6) est vissée par un disque (5) à l'extrémité su côté frontal du tenon d'arbre d'enroulement (3) qui prend appui avec une certaine tension sur l'anneau intérieur du palier pivotant (4).

7. Dispositif selon l'une des revendications 1 à 6, caractérisé en ce que le palier pivotant (4) est retenu dans l'évidement (14) par un anneau de retenue (15) déplaçable axialement qui est déplacable entre sa position de verrouillage et sa position de relâchement.

8. Dispositif selon la revendication 7, caractérisé en se que l'anneau de retenue (15) est pourvu d'un segment (26) s'engageant dans l'évidement et qui est pourvu d'une paroi intérieure en forme de coque cylindrique qui complète le fond ayant une forme de coque demi-cylindrique de l'évidement (14) en un tronçon cylindrique fermé dans lequel est retenu le palier de pivotement.

9. Dispositif selon la revendication 7 ou 8, caractérisé en ce que l'anneau de retenue (15) est déplaçable par un boulon (24) dans un trou oblong axial (25) du tenon d'arbre d'enroulement (12) entre sa position de verrouillage et sa position de relâchement.

10. Dispositif selon l'une des revendications 7 à 9, caractérisé en ce que l'anneau de retenue (15), dans sa position de verrouillage, est assuré par un cliquet (17) soumis à l'action d'un ressort.
